# EUROPÄISCHE PATENTSCHRIFT

(11) **EP 3 390 844 B1**
(45) Veröffentlichungstag und Bekanntmachung des Hinweises auf die Patenterteilung: **19.06.2019**
(21) Anmeldenummer: 16747454.3
(22) Anmeldetag: 11.07.2016
(51) Int. Cl.: F15B 15/10, F16K 31/126

(54) **FLUIDBETÄTIGTER MEMBRANANTRIEB UND DAMIT AUSGESTATTETE VENTILANORDNUNG**
FLUID-ACTUATED DIAPHRAGM DRIVE, AND VALVE ARRANGEMENT WHICH IS EQUIPPED THEREWITH
DISPOSITIF D'ENTRAÎNEMENT À MEMBRANE À ACTIONNEMENT FLUIDIQUE ET ENSEMBLE SOUPAPE EN ÉTANT ÉQUIPÉ

(43) Veröffentlichungstag der Anmeldung: 24.10.2018
(73) Patentinhaber: Festo AG & Co. KG, 73734 Esslingen (DE)
(72) Erfinder: RÖHRIG, Harald, 66583 Spiesen-Elversberg (DE); WEISANG, Andreas, 66453 Gersheim (DE)
(74) Vertreter: Patentanwälte Magenbauer & Kollegen Partnerschaft mbB
(86) Internationale Anmeldenummer: PCT/EP2016/066400
(87) Internationale Veröffentlichungsnummer: WO 2018/010760

(56) Entgegenhaltungen:
- EP-A1- 2 799 747
- EP-A2- 2 028 377
- DE-B3-102013 016 350

## Beschreibung

Die Erfindung betrifft einen fluidbetätigten Membranantrieb, der über ein Antriebsgehäuse verfügt, das zwei in einem Fügebereich unter gemeinsamer Begrenzung eines Gehäuseinnenraumes axial aneinander angesetzte Antriebsgehäuseteile aufweist, wobei in dem Gehäuseinnenraum eine zwei axial benachbarte Arbeitskammern fluiddicht voneinander abtrennende und antriebsmäßig mit einem Abtriebsglied gekoppelte Antriebsmembran angeordnet ist, die durch eine mittels einer zumindest teilweise im Antriebsgehäuse ausgebildeten Steuerkanalstruktur steuerbare Fluidbeaufschlagung wenigstens einer der Arbeitskammern axial auslenkbar ist, um eine Abtriebsbewegung des Abtriebsgliedes hervorzurufen.

Die Erfindung betrifft ferner eine mit einem solchen fluidbetätigten Membranantrieb ausgestattete Ventilanordnung.

Ein Membranantrieb der eingangs genannten Art ist aus der DE 10 2013 016 350 B3 bekannt und verfügt dort über ein an seiner Außenseite zu Schutzzwecken von einem zusätzlichen Hüllgehäuse umgebenes Antriebsgehäuse, das einen Gehäuseinnenraum definiert, der durch eine zwischen zwei Antriebsgehäuseteile des Antriebsgehäuses eingespannte Antriebsmembran in zwei fluidisch beaufschlagbare Arbeitskammern unterteilt ist. Durch gesteuerte Fluidbeaufschlagung mindestens einer der beiden Arbeitskammern kann die Antriebsmembran axial in der einen oder anderen Richtung ausgelenkt werden, um ein an der Antriebsmembran angebrachtes stangenförmiges Abtriebsglied zu bewegen. Die fluidische Ansteuerung erfolgt mittels einer die Wandung des Antriebsgehäuses durchsetzenden Steuerkanalstruktur, die über eine Mehrzahl von Steuerkanälen verfügt, die in die beiden Arbeitskammern einmünden und durch die hindurch eine gesteuerte Zufuhr und Abfuhr eines Antriebsfluides möglich ist.

Aus der EP 2 028 377 A2 ist ein Membranantrieb bekannt, der als Antriebsquelle in einer Ventilanordnung nutzbar ist und der ein Gehäuse aufweist, in dem eine Membran angeordnet ist, die mit ihrem radial äußeren Bereich mit dem Gehäuse dicht verbunden ist. Durch die Membran wird der Innenraum des Gehäuses in zwei Arbeitskammern unterteilt, von denen die eine gesteuert mit einem Druckmedium beaufschlagbar ist, während in der anderen eine Federeinrichtung sitzt, die sich zwischen der Membran und dem Gehäuse abstützt und durch die die Membran und eine daran befestigte Ventilspindel in eine Grundstellung vorgespannt sind.

Der Erfindung liegt die Aufgabe zugrunde, Maßnahmen zu schaffen, die den optimierten Aufbau eines fluidbetätigten Membranantriebes ermöglichen.

Zur Lösung dieser Aufgabe ist bei einem fluidbetätigten Membranantrieb der eingangs genannten Art vorgesehen, dass die Antriebsmembran an ihrem äußeren Randabschnitt unter Abdichtung ringsum axial zwischen bezüglich des Antriebsgehäuses separaten Einsatzkörpern eingespannt ist, die jeweils in eines der beiden Antriebsgehäuseteile eingesetzt sind und einen sich an die Antriebsmembran anschließenden peripheren Wandabschnitt der jeweils zugeordneten Arbeitskammer bilden, wobei eine Dichtungsstruktur zwischen mindestens einem der Einsatzkörper und dem Antriebsgehäuse angeordnet ist.

Die Aufgabe wird ferner gelöst durch eine Ventilanordnung, mit einer ein bewegliches Ventilglied aufweisenden Ventilarmatur und einem daran angeordneten, zur Betätigung eines Ventilgliedes dienenden Membranantrieb, der in dem vorgenannten Sinne ausgebildet ist und dessen Abtriebsglied mit dem Ventilglied der Ventilarmatur bewegungsgekoppelt ist.

Durch die in das Antriebsgehäuse eingesetzten Einsatzkörper sind zumindest die sich unmittelbar axial an die Antriebsmembran anschließenden Längenabschnitte der beiden Arbeitskammern nicht direkt vom Antriebsgehäuse begrenzt, sondern von je einem in das Antriebsgehäuse eingesetzten und bezüglich des Antriebsgehäuses separaten Einsatzkörper. Wie es sich gezeigt hat, können solche separaten Einsatzkörper wesentlich einfacher und kostengünstiger auch in komplexerer Formgebung gefertigt werden, als dies bei den Antriebsgehäuseteilen der Fall ist, die noch weitere Anforderungen erfüllen müssen, zum Beispiel die Bereitstellung einer Steuerkanalstruktur, durch die das für den Betrieb des Membranantriebes erforderliche Antriebsfluid hindurchgeleitet werden kann. Es besteht beispielsweise die Möglichkeit, die Einsatzkörper so zu formen, dass sich die Membran bei ihrer Auslenkung daran anschmiegen kann und keine Beschädigungen aufgrund scharfer Kanten davonträgt. Ferner besteht die vorteilhafte Möglichkeit, eine Baureihe von Membranantrieben aufzulegen, die standardmäßig mit identischen Antriebsgehäuseteilen ausgestattet sind, die zur spezifischen Individualisierung der einzelnen Membranantriebe mit entsprechend angepassten Einsatzkörpern bestückt sind. Die Kombination der Einsatzkörper mit den Antriebsgehäuseteilen ermöglicht es bei Bedarf zudem, in dazwischenliegenden Bereichen Räume zu schaffen, die für eine Fluidströmung genutzt werden können, insbesondere als Bestandteile der Steuerkanalstruktur. Die zwischen dem Antriebsgehäuse und einem oder beiden Einsatzkörpern wirksame Dichtungsstruktur verhindert zweckmäßigerweise ein axiales Vorbeiströmen von Fluid in dem zwischen den Einsatzkörpern und dem Antriebsgehäuse liegenden Bereich. Die Dichtungsstruktur sorgt insbesondere für eine fluiddichte Abschottung axial aufeinanderfolgender Zonen im Umfangsbereich der Einsatzkörper, sodass ein zur Betätigung des Membranantriebes verwendetes Antriebsfluid, das in eine der beiden Arbeitskammern eingespeist wird, an einem Übertritt in die andere Arbeitskammer gehindert wird. Mit Hilfe der Dichtungsstruktur können bei Bedarf zudem besonders einfach ein oder mehrere Hohlräume zwischen dem Antriebsgehäuse und den Einsatzkörpern definiert werden, die für die Hindurchleitung des Antriebsfluides nutzbar sind.

Vorteilhafte Weiterbildungen der Erfindung gehen aus den Unteransprüchen hervor.

Die zwischen der Anordnung von Einsatzkörpern und dem Antriebsgehäuse abdichtende Dichtungsstruktur ist zweckmäßigerweise bezüglich der Einsatzkörper und/oder des Antriebsgehäuses separat ausgebildet und enthält zweckmäßigerweise mindestens einen koaxial zu den Einsatzkörpern angeordneten Dichtungsring, insbesondere einen O-Ring. Die Dichtungsstruktur kann nur einen einzigen solchen Dichtungsring oder aber mehrere mit axialem Abstand zueinander angeordnete Dichtungsringe enthalten. Jeder Dichtungsring bildet einen einerseits bezüglich mindestens eines Einsatzkörpers und andererseits bezüglich mindestens eines Antriebsgehäuseteils abdichtenden Dichtungsabschnitt.

Anstatt als eigenständiger Dichtungsring kann jeder Dichtungsabschnitt alternativ auch als ein Dichtungsmaterialbelag ausgeführt sein, der an einem Einsatzkörper oder am Antriebsgehäuseteil stoffschlüssig fixiert ist, insbesondere durch Spritzgießen.

Ein Dichtungsabschnitt kann auch direkt vom äußeren radialen Randbereich der Antriebsmembran gebildet sein, wenn die Antriebsmembran so ausgeführt ist, dass sie radial außen über die beiden Einsatzkörper übersteht und mit dem überstehenden Randabschnitt abdichtend mit dem Antriebsgehäuse zusammenwirkt.

Vorzugsweise sind die Wandungen der Einsatzkörper durchbrechungslos ausgebildet. Dies ermöglicht eine besonders einfache Herstellung. Fluidströmungen, die der Beaufschlagung der Antriebsmembran dienen, gehen folglich nicht durch die Wandungen der Einsatzkörper hindurch. Die Steuerkanalstruktur durchdringt also vorzugsweise nicht die Wandungen der Einsatzkörper.

Bei einer bevorzugten Ausgestaltung sind zwischen einem der beiden Einsatzkörper und dem zugeordneten Antriebsgehäuseteil genau zwei axial zueinander beabstandete ringförmige Dichtungsabschnitte vorgesehen. In diesem Zusammenhang ist es zweckmäßig, wenn dem anderen Einsatzkörper nur ein einziger ringförmiger Dichtungsabschnitt zugeordnet ist. Prinzipiell kann aber jeder Einsatzkörper mit genau einem oder auch mit mehreren Dichtungsabschnitten der Dichtungsstruktur kooperieren.

Eine bevorzugte Ausgestaltung der Einsatzkörper sieht deren Ausgestaltung als Ringkörper vor. Somit ist jeder Einsatzkörper axial einerseits zur Antriebsmembran und andererseits zur entgegengesetzten Begrenzungswand der zugeordneten Arbeitskammer hin offen. Dies ermöglicht es in vorteilhafter Weise, die zur Fluidbeaufschlagung der Antriebsmembran erforderliche Zufuhr und Abfuhr des Antriebsfluides durch den von dem ringförmigen Einsatzkörper umschlossenen Ringinnenraum hindurch vorzunehmen, der einen Längenabschnitt der zugeordneten Arbeitskammer bildet.

Insbesondere wenn die Einsatzkörper ringförmig ausgebildet sind, wird die die zugeordnete Arbeitskammer auf der der Antriebsmembran axial entgegengesetzten Seite begrenzende Abschlusswand der Arbeitskammer vom Antriebsgehäuse gebildet. Diese Abschlusswand ist bevorzugt mit axialem Abstand zu dem maximalen axialen Hubbereich der auslenkbaren Antriebsmembran angeordnet, sodass zu jeder Zeit ein Kontakt zwischen der Antriebsmembran und der vom Antriebsgehäuse gebildeten Abschlusswand verhindert ist.

Es wäre prinzipiell möglich, die beiden Einsatzkörper durch unmittelbar zwischen ihnen wirkende Spannmittel axial zusammenzuspannen, um sie zu einer Einsatzkörper-Baugruppe zusammenzufassen und dabei gleichzeitig die Antriebsmembran eingespannt festzuhalten. Wesentlich kostengünstiger lässt sich der Membranantrieb allerdings realisieren, wenn auf eine direkte Spannverbindung zwischen den beiden Einsatzkörpern verzichtet wird und die beiden Einsatzkörper nur durch die sie aufnehmenden Antriebsgehäuseteile miteinander und mit der zwischengefügten Antriebsmembran verspannt sind. Bei zusammengebautem Antriebsgehäuse sind die beiden Antriebsgehäuseteile durch geeignete Spannmittel, insbesondere Spannschrauben, axial so zusammengespannt, dass sie von entgegengesetzten axialen Seiten her auf die beiden Einsatzkörper einwirken und selbige gemeinsam mit der zwischen sie eingreifenden Antriebsmembran axial verspannen. Auf diese Weise kann auf gesonderte, unmittelbar zwischen den Einsatzkörpern wirkende Spannverbindungsmaßnahmen zur Einsparung von Herstellungs- und Montageaufwand verzichtet werden.

Jeder Einsatzkörper verfügt zweckmäßigerweise über einen vom jeweils anderen Einsatzkörper axial abgewandten Abstützabschnitt, auf den das mit dem betreffenden Einsatzkörper bestückte Antriebsgehäuseteil mittels eines daran ausgebildeten Gegenabstützabschnittes einwirkt.

Bei einer bevorzugten Ausgestaltung des Membranantriebes bildet mindestens ein und bevorzugt jeder Einsatzkörper gemeinsam mit dem ihn aufnehmenden Antriebsgehäuseteil mindestens einen zu der Steuerkanalstruktur gehörenden Fluidleitungsraum. Dabei kann mit Hilfe der Dichtungsstruktur ein unerwünschter axialer Fluidübertritt zwischen axial benachbarten Bereichen verhindert werden. Mindestens einer und bevorzugt jeder der Fluidleitungsräume ist bevorzugt ein Ringraum, der konzentrisch um den zugeordneten Einsatzkörper herum angeordnet ist, sodass sich das darin befindliche Fluid rings um den betreffenden Einsatzkörper herum verteilen kann. Es besteht in diesem Zusammenhang die vorteilhafte Möglichkeit, in der Wandung des Antriebsgehäuses ausgebildete Kanalabschnitte der Steuerkanalstruktur so anzuordnen, dass sie an unterschiedlichen Umfangsbereichen eines Fluidleitungsraumes einmünden, sodass mittels eines Fluidleitungsraumes die Fluidführung zwischen unterschiedlichen radialen Seiten der Antriebseinheit gewechselt werden kann. Dies erlaubt beispielsweise eine besonders einfache Umgehung der Anordnung von Einsatzkörpern, wenn auf der einen axialen Seite der Antriebsmembran in das Antriebsgehäuse eingespeistes Antriebsfluid zu der auf der entgegengesetzten Seite der Antriebsmembran liegenden Arbeitskammer geführt werden soll.

Auf diese Weise ist insbesondere eine Bauform möglich, bei der die Steuerkanalstruktur eine auf der einen axialen Seite der Antriebsmembran außen am Antriebsgehäuse angeordnete, für die Fluideinspeisung und die Fluidabfuhr nutzbare Anschlussöffnung aufweist und die Steuerkanalstruktur innerhalb des Antriebsgehäuses mittels mindestens eines Fluidleitungsraumes auf die andere axiale Seite der Antriebsmembran geführt ist, um mit der dort befindlichen Arbeitskammer zu kommunizieren.

Bei ringförmig ausgebildeten Einsatzkörpern ist es vorteilhaft, wenn die einander zugewandten vorderen Ringöffnungen der Einsatzkörper einen größeren Querschnitt haben als die diesbezüglich entgegengesetzten hinteren Ringöffnungen. Auf diese Weise kann eine besonders günstige Formgebung für den von einem Einsatzkörper gebildeten peripheren Wandabschnitt einer Arbeitskammer gewählt werden, durch die die Antriebsmembran abstützbar ist, um sie vor einer Überdehnung zu schützen.

Eine besonders zweckmäßige Struktur der Einsatzkörper sieht vor, dass die Einsatzkörper ringförmig ausgebildet sind und jeweils einen radial innenliegenden, einen peripheren Wandabschnitt einer Arbeitskammer bildenden inneren Ringabschnitt sowie einen radial außenliegenden, den inneren Ringabschnitt koaxial umschließenden und im Wesentlichen hohlzylindrischen äußeren Ringabschnitt enthalten. Die beiden Ringabschnitte sind an der der Antriebsmembran zugewandten Vorderseite des Einsatzkörpers einstückig miteinander verbunden. Der Ringkörper des Einsatzkörpers kann im Querschnitt betrachtet zumindest partiell etwa V-ähnlich geformt sein, wobei sich radial zwischen den beiden Ringabschnitten ein sich von der Vorderseite zur Rückseite des Einsatzkörpers hin im Querschnitt erweiternder Zwischenraum ergibt.

Für die radiale Innenfläche desjenigen Abschnittes des Einsatzkörpers, der einen peripheren Wandabschnitt einer Arbeitskammer bildet, empfiehlt sich an der der Arbeitskammer zugewandten Seite eine konkave Gestaltung. Der Übergangsbereich dieses konkaven peripheren Wandabschnittes zur Vorderseite des Einsatzkörpers ist zweckmäßigerweise konvex gekrümmt, wobei der Radius relativ groß ist, damit die Membran bei ihrer Verformung vor Beschädigung geschützt ist.

Die beiden Antriebsgehäuseteile bestehen zweckmäßigerweise aus Metall, vorzugsweise wird ein Aluminiummaterial oder Edelstahl gewählt. Die Einsatzkörper können ebenfalls aus Metall bestehen, werden aber bevorzugt aus einem Kunststoffmaterial realisiert, das, beispielsweise durch Spritzgießen, eine besonders kostengünstige Herstellung mit beliebig komplexer Gestaltung der Einsatzkörper ermöglicht.

Soll der Membranantrieb als doppeltwirkender Membranantrieb genutzt werden, wird die Steuerkanalstruktur so realisiert, dass sie mit beiden Arbeitskammern kommuniziert und bezüglich beider Arbeitskammern eine bevorzugt voneinander unabhängige gesteuerte Fluidbeaufschlagung möglich ist.

Ein Membranantrieb in einfachwirkender Bauform lässt sich besonders einfach dadurch realisieren, dass die Steuerkanalstruktur, soweit sie für eine fluidische Ansteuerung genutzt wird, nur mit einer der beiden Arbeitskammern kommuniziert oder - wenn sie mit beiden Arbeitskammern kommuniziert - nur bezüglich einer der beiden Arbeitskammern genutzt wird. In der anderen Arbeitskammer befindet sich dann eine Federeinrichtung, die zwischen der Antriebsmembran und dem Antriebsgehäuse wirksam ist und durch die die Antriebsmembran und folglich auch das Abtriebsglied elastisch nachgiebig in eine Grundstellung vorgespannt sind. In Verbindung mit einer Integration des Membranantriebes in eine Ventilanordnung lässt sich auf diese Weise wahlweise eine Bauart der Ventilanordnung vom Typ "Normalerweise offen" oder vom Typ "Normalerweise geschlossen" realisieren.

Das Abtriebsglied ist bevorzugt stangenförmig ausgebildet und so angeordnet, dass es mindestens eines der Antriebsgehäuseteile gleitverschieblich nach außen hin durchsetzt. Ein aus dem Antriebsgehäuse herausragender Längenabschnitt des Abtriebsgliedes kann zur Kopplung mit einem beweglichen Ventilglied einer Ventilarmatur genutzt werden, wenn der Membranantrieb als Komponente einer Ventilanordnung ausgeführt ist. Das Abtriebsglied kann bei Bedarf auch als Anzeigemittel und/oder Steuermittel genutzt werden, mit dessen Hilfe die aktuelle Position des Abtriebsgliedes visualisierbar oder auf andere Weise anzeigbar ist und/oder dessen aktuelle Position erfassbar ist, um als Positionssignal in einer elektronischen Steuerung verwertet zu werden.

Nachfolgend wird die Erfindung anhand der beiliegenden Zeichnung näher erläutert. In dieser zeigen:
- Figur 1: in einer perspektivischen Außenansicht eine bevorzugte erste Ausführungsform des erfindungsgemäßen fluidbetätigten Membranantriebes,
- Figur 2: den Membranantrieb aus Figur 1 mit Blick auf die bezüglich Figur 1 entgegengesetzte axiale Unterseite,
- Figur 3: einen Längsschnitt des Membranantriebes der Figuren 1 und 2 gemäß Schnittebene III-III aus Figur 1, wobei am unteren Ende des Membranantriebes strichpunktiert eine Ventilarmatur illustriert ist, an der der Membranantrieb montiert sein kann, um eine Ventilanordnung zu bilden,
- Figur 4: den Membranantrieb der Figuren 1 bis 3 in einem Längsschnitt gemäß Schnittebene IV-IV aus Figur 1, und
- Figur 5: einen Längsschnitt des Membranantriebes in einer der Figur 3 entsprechenden Schnittebene und in einer Explosionsdarstellung.

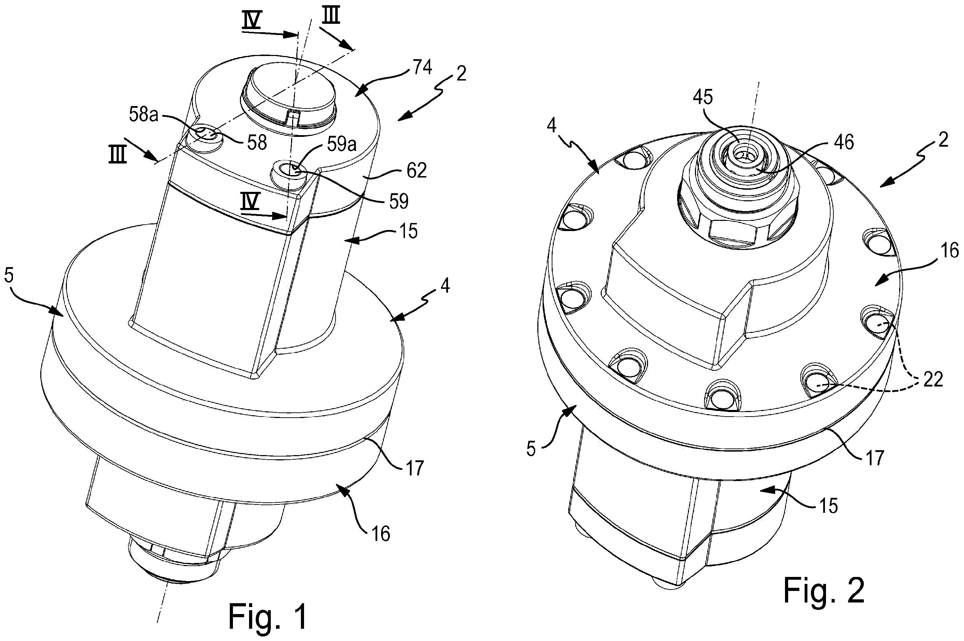

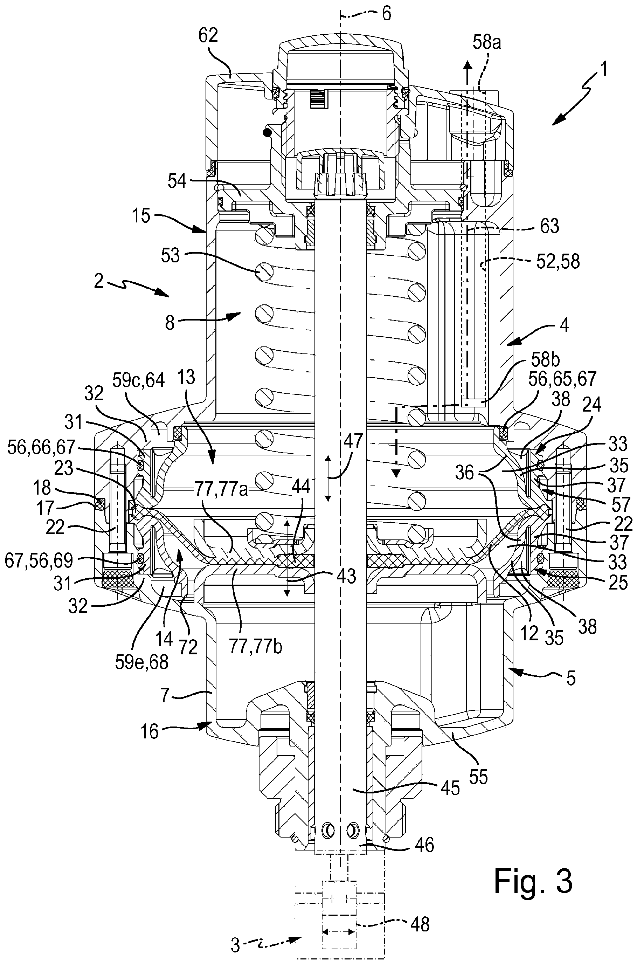

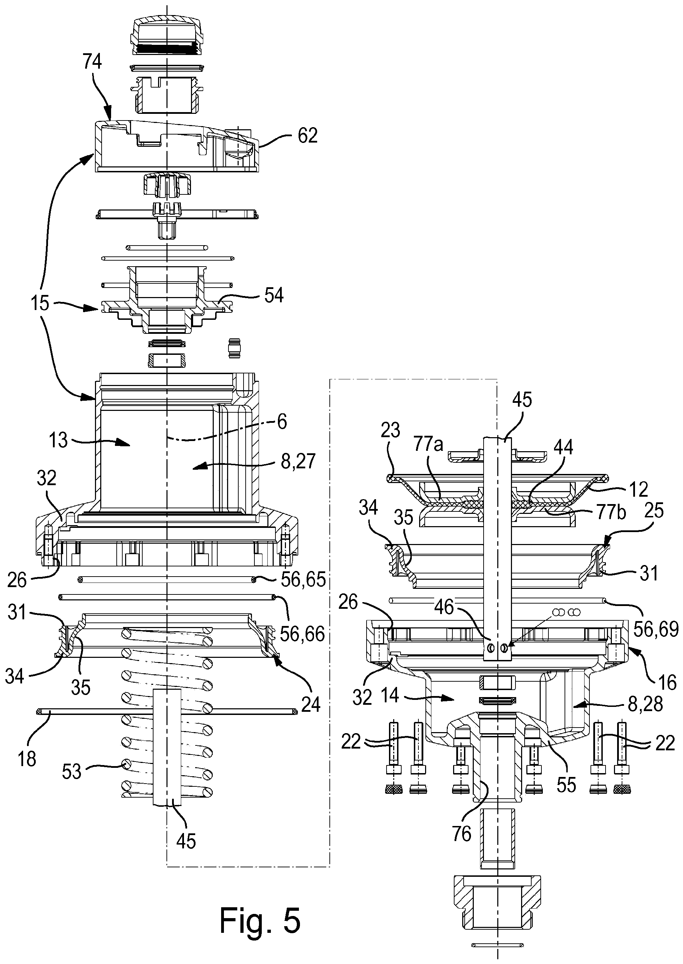

Die Figur 3 zeigt eine insgesamt mit Bezugsziffer 1 bezeichnete Ventilanordnung, die sich aus einem im Längsschnitt dargestellten fluidbetätigten Membranantrieb 2 und einer mit diesem Membranantrieb 2 bestückten, lediglich strichpunktiert schematisch angedeuteten Ventilarmatur 3 zusammensetzt. Die Figuren 1, 2, 4 und 5 zeigen den Membranantrieb 2 ohne zugeordnete Ventilarmatur 3. Gemeinsam mit der Ventilarmatur 3 bildet die Ventilanordnung 1 bevorzugt eine Prozessventilanordnung, die in der Prozesssteuerung bei beispielsweise chemischen und biochemischen Anwendungen zum Einsatz gelangen kann.

Der Membranantrieb 2 ist allerdings auch für andere Antriebsaufgaben geeignet, beispielsweise zum Einsatz in der Produktions- und Montagetechnik.

Der Membranantrieb 2 verfügt über ein Gehäuse 5, das im Folgenden als Antriebsgehäuse 5 bezeichnet wird. Das Antriebsgehäuse 5 ist insbesondere Bestandteil einer Antriebseinheit 4, die eine Längsachse 6 hat, bei der es sich gleichzeitig um die Längsachse des Antriebsgehäuses 5 handelt.

Das Antriebsgehäuse 5 hat eine Antriebsgehäusewand 7, die einen Gehäuseinnenraum 8 umschließt und die zweckmäßigerweise auch die von außen sichtbare Außenfläche des Antriebsgehäuses 5 definiert.

In dem Gehäuseinnenraum 8 befindet sich eine als Antriebsmembran 12 bezeichnete, elastisch verformbare Membran, die bevorzugt aus einem Material mit gummielastischen Eigenschaften besteht. Die Antriebsmembran 12 erstreckt sich quer zu der Längsachse 5 und unterteilt den Gehäuseinnenraum 8 axial in zwei Teilräume, die als erster Arbeitsraum 13 und zweiter Arbeitsraum 14 bezeichnet seien. Die Antriebsmembran 12 ist fluiddicht und verhindert dadurch eine fluidische Kommunikation zwischen den beiden Arbeitsräumen 13, 14.

Das Antriebsgehäuse 5 ist in zwei axial aufeinanderfolgend angeordnete Gehäuseteile unterteilt, die im Folgenden als erstes Antriebsgehäuseteil 15 und als zweites Antriebsgehäuseteil 16 bezeichnet seien. In einem sich quer und insbesondere rechtwinkelig zu der Längsachse 6 erstreckenden Fügebereich 17 sind die beiden Antriebsgehäuseteile 15, 16 axial aneinander angesetzt, vorzugsweise unter Zwischenschaltung einer Gehäusedichtung 18.

Mit Hilfe von Spannmitteln 22, bei denen es sich insbesondere um Spannschrauben handelt, sind die beiden Antriebsgehäuseteile 15, 16 in dem Fügebereich 17 axial miteinander verspannt, sodass sie eine fest zusammenhaltende Gehäusebaugruppe in Gestalt des Antriebsgehäuses 5 bilden. Die Spannmittel 22 sind insbesondere nach Art einer Flanschverschraubung in mehrfacher Anordnung rings um die Längsachse 6 herum verteilt, bevorzugt auf einer zur Längsachse 6 konzentrischen Kreislinie liegend.

Die bevorzugt eine kreisförmige Außenkontur aufweisende Antriebsmembran 12 hat einen ringförmig in sich geschlossenen, zu der Längsachse 6 konzentrischen äußeren Randabschnitt 23. An diesem äußeren Randabschnitt 23 ist die Antriebsmembran 12 bezüglich des Antriebsgehäuses 5 unbeweglich fixiert. Die Fixierung erfolgt allerdings nicht direkt am Antriebsgehäuse 5, sondern durch axiales Einspannen zwischen zwei bezüglich des Antriebsgehäuses 5 separaten, ersten und zweiten Einsatzkörpern 24, 25, die in dem Gehäuseinnenraum 8 axial und radial unbeweglich fixiert sind.

Der erste Einsatzkörper 24 sitzt koaxial in dem ersten Antriebsgehäuseteil 15 und der zweite Einsatzkörper 25 sitzt koaxial in dem zweiten Antriebsgehäuseteil 16. Jedes Antriebsgehäuseteil 15, 16 begrenzt einen Innenraumabschnitt 27, 28 des Gehäuseinnenraumes 8, der über eine vordere Gehäuseteilöffnung 26 im Fügebereich 17 axial zum jeweils anderen Antriebsgehäuseteil 15, 16 hin offen ist. Da die vorderen Gehäuseteilöffnungen 26 der beiden Antriebsgehäuseteile 15, 16 miteinander fluchten, ergänzen sie sich zu dem Gehäuseinnenraum 8.

Jeder Einsatzkörper 24, 25 ist in den Innenraumabschnitt 27, 28 des zugeordneten Antriebsgehäuseteils 15, 16 durch die vordere Gehäuseteilöffnung 26 hindurch eingesetzt und insbesondere axial eingesteckt. Die Einbautiefe ist durch miteinander kooperierende Anschlagmittel vorgegeben. Konkret weist zur Bildung der Anschlagmittel jeder Einsatzkörper 24, 25 an der vom Fügebereich 17 wegweisenden Seite mindestens einen und bevorzugt genau einen Abstützabschnitt 31 auf, mit dem er an einem bevorzugt von einer Abstufung an der Innenfläche der Antriebsgehäusewand 7 ausgebildeten Gegenabstützabschnitt 32 anliegt.

Die axiale Länge und die axiale Position der Einsatzkörper 24, 25 ist derart gewählt, dass sie im in das zugeordnete Antriebsgehäuseteil 15, 16 eingesetzten Zustand an ihrer axialen Vorderseite etwa bündig mit dem Fügebereich 17 ausgerichtet sind. Bevorzugt ist jeder Einsatzkörper 24, 25 axial kürzer al der ihn aufnehmende Innenraumabschnitt 27, 28 des Gehäuseinnenraumes 8.

Die beiden Einsatzkörper 24, 25 sind insbesondere jeweils ringförmig ausgebildet und koaxial zur Längsachse 6 angeordnet. Jeder ringförmige Einsatzkörper 24, 25 umschließt radial außen einen axial durchgehenden Innenraum, der zur besseren Unterscheidung als Ringinnenraum 33 bezeichnet sei. Jeder Einsatzkörper 24, 25 hat eine der Antriebsmembran 12 zugewandte Vorderseite und eine von der Antriebsmembran 12 abgewandte Rückseite, wobei der Ringinnenraum 33 an der Vorderseite über eine vordere Ringöffnung 33a und an der Rückseite über eine hintere Ringöffnung 33b offen ist. Die vordere Ringöffnung 33a jedes Einsatzkörpers 24, 25 ist von einem zu der Längsachse 6 konzentrischen, ringförmigen Einspannabschnitt 34 des betreffenden Einsatzkörpers 24, 25 umrahmt.

Die Antriebsmembran 12 ragt mit ihrem äußeren Randabschnitt 23 axial zwischen die einander zugewandten Einspannabschnitte 34 der beiden Einsatzkörper 24, 25, zwischen denen sie axial zusammengepresst und dadurch unter Abdichtung eingespannt ist.

Der Kraftfluss für die dabei wirkende Einspannkraft verläuft durch die Spannmittel 22 zwischen den beiden Antriebsgehäuseteilen 15, 16, von dort über die sich axial aneinander abstützenden Abstützabschnitte 31 und Gegenabstützabschnitte 32 in die beiden Einsatzkörper 24, 25 und von dort aus über die beiden Einspannabschnitte 34 in den äußeren Randabschnitt 23 der Antriebsmembran 12.

Somit sind die beiden Einsatzkörper 24, 25 ohne eine direkte Spannverbindung allein durch die axiale Beaufschlagung seitens der sie aufnehmenden Antriebsgehäuseteile 15, 16 axial miteinander und gleichzeitig mit der zwischen sie eingreifenden Antriebsmembran 12 verspannt.

Die sich axial beidseits an die Antriebsmembran 12 anschließenden Längenabschnitte der beiden Arbeitskammern 13, 14 sind jeweils vom Ringinnenraum 33 eines der beiden Einsatzkörper 24, 25 gebildet. Jeder dieser Einsatzkörper 24, 25 definiert einen peripheren Wandabschnitt 35 der zugeordneten ersten beziehungsweise zweiten Arbeitskammer 13, 14.

Der periphere Wandabschnitt 35 schließt sich insbesondere direkt an den ringförmigen Einspannabschnitt 34 an. Er ist zweckmäßigerweise so konturiert, dass der Ringinnenraum 33 an der Vorderseite des Einsatzkörpers 24, 25 einen größeren Durchmesser hat als an der Rückseite. Anders ausgedrückt hat die vordere Ringöffnung 33a einen größeren Querschnitt als die hintere Ringöffnung 33b.

Der Einsatzkörper 24, 25 ist insbesondere ein einstückiges Bauteil, das vorzugsweise aus einem starren Kunststoffmaterial besteht. Andere Materialien sind allerdings auch möglich, insbesondere Aluminium oder auch ein Metall-Polymer-Verbundmaterial.

Die beiden Antriebsgehäuseteile 15, 16 sind zweckmäßigerweise aus Metall gefertigt, insbesondere aus Aluminium oder aus Edelstahl.

Eine bevorzugte, beim Ausführungsbeispiel realisierte Gestaltung der Einsatzkörper 24, 25 sieht vor, dass ihr unmittelbar einen peripheren Wandabschnitt 35 einer Arbeitskammer 13, 14 bildende Bestandteil ein radial innenliegender innerer Ringabschnitt 36 ist, der an seiner radialen Außenseite von einem bevorzugt hohlzylindrisch gestalteten äußeren Ringabschnitt 37 konzentrisch umschlossen ist. Auch der äußere Ringabschnitt 37 schließt sich einstückig an den Einspannabschnitt 34 an, der die Vorderseite des Einsatzkörpers 24, 25 definiert. Da der innere Ringabschnitt 36 zur Rückseite hin radial nach innen strebt, befindet sich radial zwischen den beiden Ringabschnitten 36, 37 ein Zwischenraum 38, der sich zur Rückseite hin erweitert und der zur Rückseite des Einsatzkörpers 24, 25 hin offen ist. Der Zwischenraum 38 kann ringförmig ausgebildet sein oder sich lokal auf eine oder mehrere über den Ringumfang verteilte Stellen beschränken.

Der Abstützabschnitt 31 ist zweckmäßigerweise vom hinteren, freien Endabschnitt des äußeren Ringabschnittes 37 gebildet.

Der Einsatzkörpers 24, 25 definiert eine der Arbeitskammer 13, 14 zugewandte radiale Innenfläche 42. Diese ist zweckmäßigerweise so geformt, dass sie im Anschluss an den Einspannabschnitt 34 einen konvexen Innenflächenabschnitt 42a und daran anschließend einen konkaven Innenflächenabschnitt 42b aufweist. Die radiale Innenfläche 42 ist gegebenenfalls bevorzugt von dem inneren Ringabschnitt 36 gebildet.

Die Antriebsmembran 12 ist in ihrem zu dem eingespannten äußeren Randabschnitt 23 beabstandeten Bereich in beiden Achsrichtungen der Längsachse 6 unter elastischer Verformung auslenkbar. Diese auslenkende Bewegung der Antriebsmembran 12 sei als Antriebsbewegung 43 bezeichnet, die durch einen Doppelpfeil illustriert ist. Bei der Antriebsbewegung 43 kann ein zu dem äußeren Randabschnitt 23 radial beabstandeter Kraftabgabeabschnitt 44 der Antriebsmembran 12 unter Ausführung der Antriebsbewegung 43 zwischen zwei maximal ausgelenkten Stellungen verformt werden, von denen in der Zeichnung eine erste maximal ausgelenkte Stellung illustriert ist. Der Abstand zwischen den beiden maximal ausgelenkten Stellungen definiert den maximalen Hub des Kraftabgabeabschnittes 44 und folglich der Antriebsbewegung 43.

In dem Antriebsgehäuse 5 erstreckt sich ein in Achsrichtung der Längsachse 6 relativ zum Antriebsgehäuse 5 bewegliches Abtriebsglied 45. Das Abtriebsglied 45 ist bevorzugt stangenförmig ausgebildet, was auf das Ausführungsbeispiel zutrifft. Das Abtriebsglied 45 ist im Gehäuse linear verschiebbar geführt und durchsetzt die Wandung des Antriebsgehäuses 5, sodass es einen außerhalb des Antriebsgehäuses 5 zugänglichen Abtriebsabschnitt 46 besitzt. Das stangenförmige Abtriebsglied 45 ist koaxial zu der Längsachse 6 ausgerichtet.

Die Antriebsmembran 12 ist in dem Gehäuseinnenraum 8 mit ihrem Kraftabgabeabschnitt 44 an dem Abtriebsglied 45 befestigt. Dadurch wird die Antriebsbewegung 43 direkt auf das Abtriebsglied 45 übertragen, das folglich zu einer durch einen Doppelpfeil illustrierten Abtriebsbewegung 47 antreibbar ist, die relativ zum Antriebsgehäuse 5 stattfindet und in der Achsrichtung der Längsachse 6 orientiert ist. Die Abtriebsbewegung 47 kann an dem Abtriebsabschnitt 46 abgegriffen werden, was beim Ausführungsbeispiel dadurch geschieht, dass der Abtriebsabschnitt 46 antriebsmäßig mit einem Ventilglied 48 der schon angesprochenen Ventilarmatur 3 gekoppelt ist. Somit kann ein Ventilglied 48 betätigt werden, um beispielsweise einen Fluiddurchtritt durch die Ventilarmatur 3 hindurch wahlweise freizugeben oder abzusperren.

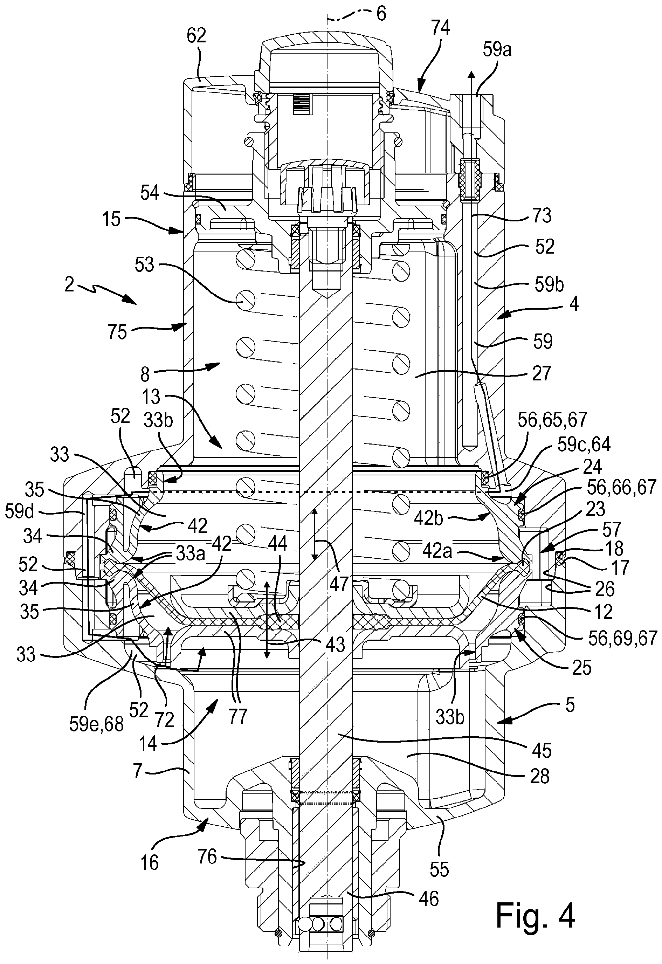

Die Antriebsbewegung 43 der Antriebsmembran 12 ist durch eine gesteuerte Fluidbeaufschlagung hervorrufbar, die mittels einer in die Antriebseinheit 4 integrierten Steuerkanalstruktur 52 realisierbar ist. Die Steuerkanalstruktur 52 erlaubt die gesteuerte Einspeisung und Abführung eines unter Druck stehenden Antriebsfluides bezüglich mindestens einer der beiden Arbeitskammern 13, 14. Beim Ausführungsbeispiel ist die Steuerkanalstruktur 52 für eine gesteuerte Fluidbeaufschlagung beider Arbeitskammern 13, 14 ausgelegt, wird aber in der Praxis nur zur gesteuerten Fluidbeaufschlagung einer der beiden Arbeitskammern 13, 14 genutzt, nämlich der in Figuren 3 und 4 unterhalb der Antriebsmembran 12 liegenden zweiten Arbeitskammer 14. Der Grund für diese nur einseitige Nutzung der gesteuerten Fluidbeaufschlagung liegt darin, dass der Membranantrieb 2 des Ausführungsbeispiels fluidisch einfachwirkend ausgelegt ist und mit einer Federeinrichtung 53 ausgestattet ist, durch die die Antriebsmembran 12 ständig in Richtung einer ihrer maximal ausgelenkten Stellungen vorgespannt ist. Beim Ausführungsbeispiel ist die Antriebsmembran 12 federnd in die erste maximal ausgelenkte Stellung vorgespannt, die in Verbindung mit der illustrierten Ventilarmatur 3 eine Schließstellung des Ventilgliedes 48 hervorruft, sodass die Ventilanordnung 1 vom Typ "Normalerweise geschlossen" ist. Die Federeinrichtung 53 befindet sich in diesem Zusammenhang in der ersten Arbeitskammer 13, wobei sie als Druckfeder ausgebildet ist und sich einerseits an der Antriebsmembran 12 und andererseits an einer die erste Arbeitskammer 13 an der der Antriebsmembran 12 axial entgegengesetzten Seite abschließenden ersten Abschlusswand 54 des ersten Antriebsgehäuseteils 15 abstützt.

Der Membranantrieb 2 kann alternativ auch so ausgeführt sein, dass die Antriebsmembran 12 in die bezüglich Figuren 3 und 4 entgegengesetzte zweite maximal ausgelenkte Stellung durch eine Federeinrichtung 53 vorgespannt ist. In diesem Fall befindet sich die Federeinrichtung 53 in der zweiten Arbeitskammer 14 und stützt sich einerseits wiederum an der Antriebsmembran 12 und andererseits an der der Antriebsmembran 12 axial entgegengesetzten, zu dem zweiten Antriebsgehäuseteil 16 gehörenden zweiten Abschlusswand 55 ab.

Bei den einfachwirkenden Bauformen des Membranantriebes 2 wird die Antriebsbewegung 43 und die daraus resultierende Positionierung der Antriebsmembran 12 und folglich des Abtriebsgliedes 45 durch eine gesteuerte Fluidbeaufschlagung derjenigen Arbeitskammer 13, 14 hervorgerufen, die nicht mit einer Federeinrichtung 53 ausgestattet ist. Eine entsprechende Beschreibung erfolgt nachstehend in Verbindung mit der illustrierten Bauform, bei der sich die Federeinrichtung 53 in der ersten Arbeitskammer 13 befindet.

Vorauszuschicken ist noch, dass die Antriebseinheit 4 auch noch eine zwischen dem Antriebsgehäuse 5 und mindestens einem der beiden Einsatzkörper 24, 25 abdichtend wirkende Dichtungsstruktur 56 umfasst, die bevorzugt ein axiales Vorbeiströmen von Antriebsfluid in dem zwischen den Einsatzkörpern 24, 25 und dem Antriebsgehäuse 5 liegenden Zwischenbereich 57 verhindert. Dadurch kann ein unkontrolliertes Überströmen von Antriebsfluid zwischen den beiden Arbeitskammern 13, 14 durch ein äußeres Umströmen der beiden Einsatzkörper 24, 25 ausgeschlossen werden.

Wenn die Antriebsmembran 12 durch Fluidbeaufschlagung einer Arbeitskammer 13, 14 axial ausgelenkt wird, bläht sie sich in gewissem Ausmaß auf, wobei sie sich an die radiale Innenfläche 42 desjenigen Einsatzkörpers 24, 25 anlegen kann, in dessen Richtung sie ausgelenkt wird. Die geschilderte Gestaltung der radialen Innenfläche 42 vermeidet dabei scharfe Kanten, die einen frühzeitigen Verschleiß des Membranmaterials hervorrufen könnten, und sorgt für eine ein Überdehnen vermeidende Abstützung der Antriebsmembran 12.

Die axiale Länge der beiden Einsatzkörper 24, 25 ist zweckmäßigerweise so gewählt, dass die Antriebsmembran 12 bei ihrer Antriebsbewegung 43 stets axial innerhalb der Ringinnenräume 33 verbleibt. Ungeachtet dessen erstrecken sich die beiden Arbeitskammern 13, 14 axial über die Rückseite der beiden Einsatzkörper 24, 25 hinaus und umfassen auch noch jeweils denjenigen Längenabschnitt des zugeordneten Innenraumabschnittes 27, 28, der sich axial zwischen dem Einsatzkörper 24, 25 und der zugeordneten Abschlusswand 54, 55 befindet.

Die zur Fluidbeaufschlagung einer oder beider Arbeitskammern 13, 14 verwendbare Steuerkanalstruktur 52 ist zumindest teilweise im Antriebsgehäuse 5 und dabei bevorzugt in der Antriebsgehäusewand 7 des Antriebsgehäuses 5 ausgebildet. Sie umfasst exemplarisch einen ersten Steuerkanal 58, der mit der ersten Arbeitskammer 13 in ständiger Fluidverbindung steht, sowie einen zweiten Steuerkanal 59, der mit der zweiten Arbeitskammer 14 in ständiger Fluidverbindung steht. Der erste Steuerkanal 58 liegt in der Schnittdarstellung der Figur 3 hinter der Schnittebene und ist deshalb nur gestrichelt angedeutet.

Der erste Steuerkanal 58 mündet mit einer ersten Anschlussöffnung 58a zu einer Außenfläche des Antriebsgehäuses 5 aus. In entsprechender Weise mündet der zweite Steuerkanal 59 mit einer zweiten Anschlussöffnung 59a ebenfalls zu einer Außenfläche des Antriebsgehäuses 5 aus. Mindestens eine und bevorzugt beide Anschlussöffnungen 58a, 59a sind am ersten Antriebsgehäuseteil 15 angeordnet, exemplarisch an einem das erste Antriebsgehäuseteil 15 an der dem Fügebereich 17 axial entgegengesetzten Seite abschließenden Abschlusselement 62.

Der erste Steuerkanal 58 verläuft in der Wandung des ersten Antriebsgehäuseteils 15 parallel zur Längsachse 6 und mündet in einem zu dem ersten Einsatzkörper 24 axial beabstandeten Bereich über eine innere Kanalmündung 58b in den Innenraumabschnitt 27 ein.

Wird der erste Steuerkanal 58 zur gesteuerten Fluidbeaufschlagung der Antriebsmembran 12 genutzt, was auf das Ausführungsbeispiel nicht zutrifft, so kann durch den ersten Steuerkanal 58 hindurch ein Antriebsfluid wahlweise in die erste Arbeitskammer 13 eingespeist oder aus der ersten Arbeitskammer 13 abgeführt werden. Ein strichpunktierter Strömungspfeil 63 verdeutlicht die dabei stattfindende Fluidströmung.

Wenn gemäß Ausführungsbeispiel die die Antriebsmembran 12 in der Richtung der ersten maximal ausgelenkten Stellung beaufschlagende Stellkraft durch eine Federeinrichtung 53 bereitgestellt wird, erfolgt keine Nutzung des ersten Steuerkanals 58, der in diesem Fall auch vollständig wegfallen kann oder als Atmungskanal genutzt wird.

Wird der erste Steuerkanal 58 jedoch bestimmungsgemäß genutzt, verhindert die Dichtungsstruktur 56 einen unerwünschten Fluidübertritt aus der ersten Arbeitskammer 13 in die zweite Arbeitskammer 14 durch den Zwischenbereich 57 hindurch, der sich radial zwischen den beiden Einsatzkörpern 24, 25 und den beiden Antriebsgehäuseteilen 15, 16 befindet.

Der zweite Steuerkanal 59 verbindet die zweite Anschlussöffnung 59a mit der zweiten Arbeitskammer 14, und zwar unter Umgehung der beiden Einsatzkörper 24, 25.

In diesem Zusammenhang verfügt der zweite Steuerkanal 59 über einen von der zweiten Anschlussöffnung 59a ausgehenden ersten Kanalabschnitt 59b, der die Wandung des ersten Antriebsgehäuseteils 15 in dessen Längsrichtung durchzieht und der in einem radial zwischen dem ersten Einsatzkörper 24 und dem ersten Antriebsgehäuseteil 15 liegenden Bereich in einen von einem ersten Ringraum 59c gebildeten weiteren Kanalabschnitt des zweiten Steuerkanals 59 ausmündet, der konzentrisch zwischen dem ersten Einsatzkörper 24 und dem ersten Antriebsgehäuseteil 15 ausgebildet ist.

Dieser erste Ringraum 59c bildet einen ringförmigen ersten Fluidleitungsraum 64, der ein Bestandteil des zweiten Steuerkanals 59 ist und sich rings um den ersten Einsatzkörper 24 herum erstreckt.

Der erste Fluidleitungsraum 64 ist axial beidseits durch die Dichtungsstruktur 56 abgedichtet. Er ist zum einen über einen ringförmigen ersten Dichtungsabschnitt 65 der Dichtungsstruktur 56 zur ersten Arbeitskammer 13 hin fluiddicht abgetrennt und zum anderen über einen ringförmigen zweiten Dichtungsabschnitt 66 der Dichtungsstruktur 56 in Richtung zu dem Fügebereich 17. Jeder ringförmige Dichtungsabschnitt 65 bewirkt eine Abdichtung sowohl bezüglich des ersten Einsatzkörpers 24 als auch bezüglich des ersten Antriebsgehäuseteils 15. Beide Dichtungsabschnitte 65, 66 sind zweckmäßigerweise sowohl bezüglich des ersten Einsatzkörpers 24 als auch bezüglich des Antriebsgehäuses 5 separat ausgebildet und bestehen beim Ausführungsbeispiel aus ringförmigen Dichtungsringen 67, die in Aufnahmenuten des ersten Einsatzkörpers 24 gehalten sind.

Im Anschluss an den von dem ersten Fluidleitungsraum 64 gebildeten ersten Ringraum 59c setzt sich der zweite Steuerkanal 59 in der Wandung des Antriebsgehäuses 5 mit einem dritten Kanalabschnitt 59d fort, der sich aus einem im ersten Antriebsgehäuseteil 15 ausgebildeten Teilabschnitt und einem im zweiten Antriebsgehäuseteil 16 ausgebildeten zweiten Teilabschnitt zusammensetzt, die in dem Fügebereich 17 miteinander fluchten. Der erste Teilabschnitt des dritten Kanalabschnittes 59d kommuniziert mit dem ersten Fluidleitungsraum 64. Der zweite Teilabschnitt des dritten Kanalabschnittes 59d kommuniziert mit einem weiteren Kanalabschnitt des zweiten Steuerkanals 59, der von einem zweiten Ringraum 59e gebildet ist. Der zweite Ringraum 59e ist in dem im zweiten Antriebsgehäuseteil 16 ausgebildeten Innenraumabschnitt 28 des Gehäuseinnenraumes 8 konzentrisch zwischen dem zweiten Einsatzkörper 25 und dem zweiten Antriebsgehäuseteil 16 angeordnet und repräsentiert einen ringförmigen zweiten Fluidleitungsraum 68, der einerseits axial zur zweiten Arbeitskammer 14 hin offen ist, andererseits aber über einen ringförmigen dritten Dichtungsabschnitt 69 der Dichtungsstruktur 56 axial zu dem Fügebereich 17 hin abgedichtet ist. Der dritte Dichtungsabschnitt 69 dichtet radial zwischen dem zweiten Einsatzkörper 25 und dem zweiten Antriebsgehäuseteil 16, wobei auch er zweckmäßigerweise ein diesbezüglich separater Körper ist und insbesondere von einem Dichtungsring gebildet ist, der in einer Aufnahmenut des zweiten Einsatzkörpers 25 gehalten ist.

Ein ringförmiger Spalt 72 zwischen dem zweiten Einsatzkörper 25 und dem zweiten Antriebsgehäuseteil 16 schafft eine dauernde Verbindung zwischen dem zweiten Fluidleitungsraum 68 und der zweiten Arbeitskammer 14, sodass die Möglichkeit besteht, ein Antriebsfluid gemäß Strömungspfeil 73 über die zweite Anschlussöffnung 59a hinweg wahlweise in die zweite Arbeitskammer 14 einzuspeisen oder aus dieser zweiten Arbeitskammer 14 abzuführen.

Der ringförmige Spalt 72 ermöglicht eine Kommunikation des zweiten Steuerkanals 59 mit der zweiten Arbeitskammer 14 axial außerhalb des zweiten Einsatzkörpers 25. Da der zweite Einsatzkörper 25 jedoch, wie bevorzugt auch der erste Einsatzkörper 24, ringförmig ausgebildet ist, kann die Antriebsmembran 12 durch den von dem zweiten Einsatzkörper 25 umschlossenen Ringinnenraum 33 hindurch gesteuert mit Antriebsfluid beaufschlagt werden. Dies bietet den Vorteil, dass die Wandung des zweiten Einsatzkörpers 25 und vorzugsweise auch diejenige des ersten Einsatzkörpers 24 durchbrechungslos ausgebildet sein kann, was auf das Ausführungsbeispiel zutrifft. Die Wandung jedes Einsatzkörpers 24, 25 ist in der Umfangsrichtung der Längsachse 6 ringsum zweckmäßigerweise geschlossen, sodass durch diese Wandung hindurch kein Fluidaustausch möglich ist.

Die ringförmigen Dichtungsabschnitte 65, 66, 69 sind koaxial zueinander und mit axialem Abstand zueinander angeordnet. Entsprechend der äußeren Formgebung der Einsatzkörper 24, 25 können sie über unterschiedliche Durchmesser verfügen.

Der Membranantrieb 2 ist insbesondere zum Betreiben mit Druckluft als Antriebsfluid ausgeführt. Prinzipiell lässt er sich allerdings auch mit anderen Druckfluiden betreiben, insbesondere mit flüssigen Druckmedien.

Mindestens eine und bevorzugt beide Anschlussöffnungen 58a, 59a sind zweckmäßigerweise an einem stirnseitigen Außenflächenabschnitt 74 des ersten Antriebsgehäuseteils 15 angeordnet. Dieser stirnseitige Außenflächenabschnitt 74 ist exemplarisch an dem stirnseitigen Abschlusselement 62 vorgesehen, das stirnseitig an einer Grundeinheit 75 des ersten Antriebsgehäuseteils 15 montiert ist, wobei die Grundeinheit 75 haubenförmig strukturiert ist und den im ersten Antriebsgehäuseteil 15 ausgebildeten Innenraumabschnitt 27 des Gehäuseinnenraumes 8 definiert. Die erste Abschlusswand 54 ist ein Bestandteil der Grundeinheit 75, allerdings bevorzugt lösbar fixiert. Das Abschlusselement 62 ist der ersten Abschlusswand 54 axial nachgeschaltet. Unter Einbeziehung des ersten Abschlusselementes 62 ist das erste Antriebsgehäuseteil 15 bevorzugt haubenförmig ausgebildet.

Auch das zweite Antriebsgehäuseteil 16 ist insbesondere haubenförmig gestaltet, wobei die zweite Abschlusswand 55 bevorzugt ein integraler Bestandteil des zweiten Antriebsgehäuseteils 16 ist. Das stangenförmige Abtriebsglied 45 durchsetzt gleitverschieblich eine Wanddurchbrechung 76 der zweiten Abschlusswand 55, in der zweckmäßigerweise eine Führungsbuchse zur Linearführung des Abtriebsgliedes 45 und ein Dichtungsring zur dynamischen Abdichtung des Abtriebsgliedes 45 bezüglich des zweiten Antriebsgehäuseteils 16 untergebracht sind.

Die die Übertragung von Antriebskräften ermöglichende Fixierung der Antriebsmembran 12 am Abtriebsglied 45 erfolgt zweckmäßigerweise durch zusätzliche Befestigungsmittel 77. Exemplarisch bestehen die Befestigungsmittel 77 aus zwei scheibenförmigen, mittig gelochten Befestigungstellern 77a, 77b, zwischen denen der Kraftabgabeabschnitt 44 eingespannt ist und die auf beliebige Weise an dem Abtriebsglied 45 befestigt sind, insbesondere durch eine Schweißverbindung.

## Patentansprüche

1. Fluidbetätigter Membranantrieb, mit einem Antriebsgehäuse (5), das zwei in einem Fügebereich (17) unter gemeinsamer Begrenzung eines Gehäuseinnenraumes (8) axial aneinander angesetzte Antriebsgehäuseteile (15, 16) aufweist, wobei in dem Gehäuseinnenraum (8) eine zwei axial benachbarte Arbeitskammern (13, 14) fluiddicht voneinander abtrennende und antriebsmäßig mit einem Abtriebsglied (45) gekoppelte Antriebsmembran (12) angeordnet ist, die durch eine mittels einer zumindest teilweise im Antriebsgehäuse (5) ausgebildeten Steuerkanalstruktur (52) steuerbare Fluidbeaufschlagung wenigstens einer der Arbeitskammern (13, 14) axial auslenkbar ist, um eine Abtriebsbewegung (47) des Abtriebsgliedes (45) hervorzurufen, **dadurch gekennzeichnet, dass** die Antriebsmembran (12) an ihrem äußeren Randabschnitt (23) unter Abdichtung ringsum axial zwischen bezüglich des Antriebsgehäuses (5) separaten Einsatzkörpern (24, 25) eingespannt ist, die jeweils in eines der beiden Antriebsgehäuseteile (15, 16) eingesetzt sind und einen sich an die Antriebsmembran (12) anschließenden peripheren Wandabschnitt (35) der jeweils zugeordneten Arbeitskammer (13, 14) bilden, wobei eine Dichtungsstruktur (56) zwischen mindestens einem der Einsatzkörper (24, 25) und dem Antriebsgehäuse (5) angeordnet ist.

2. Membranantrieb nach Anspruch 1, **dadurch gekennzeichnet, dass** die Dichtungsstruktur (56) bezüglich der Einsatzkörper (24, 25) und/oder dem Antriebsgehäuse (5) separat ausgebildet ist und zweckmäßigerweise über einen oder mehrere koaxial zu den Einsatzkörpern (24, 25) angeordnete(n) Dichtungsring(e) (67) verfügt.

3. Membranantrieb nach Anspruch 1 oder 2, **dadurch gekennzeichnet, dass** die Wandung jedes Einsatzkörpers (24, 25) durchbrechungslos ausgebildet ist, sodass eine gesteuerte Fluidbeaufschlagung der Antriebsmembran (12) ohne einen durch die Wandung der Einsatzkörper (24, 25) hindurch stattfindenden Fluiddurchtritt ausführbar ist.

4. Membranantrieb nach einem der Ansprüche 1 bis 3, **dadurch gekennzeichnet, dass** die Dichtungsstruktur (56) mehrere koaxial und mit axialem Abstand zueinander angeordnete ringförmige Dichtungsabschnitte (65, 66, 69) aufweist, wobei zweckmäßigerweise mindestens einem Einsatzkörper (24) zwei axial zueinander beabstandete ringförmige Dichtungsabschnitte (65, 66) zugeordnet sind, wobei zweckmäßigerweise dem einen Einsatzkörper (24) genau zwei axial zueinander beabstandete ringförmige Dichtungsabschnitte (65, 66) zugeordnet sind und dem anderen Einsatzkörper (25) nur ein einziger ringförmiger Dichtungsabschnitt (69) zugeordnet ist.

5. Membranantrieb nach einem der Ansprüche 1 bis 4, **dadurch gekennzeichnet, dass** die beiden Einsatzkörper (24, 25) unter Umrahmung eines Ringinnenraumes (33) ringförmig ausgebildet sind, wobei die Steuerkanalstruktur (52) in Bezug auf mindestens eine Arbeitskammer (13, 14) außerhalb des von dem zugeordneten Einsatzkörper (24, 25) umschlossenen Abschnittes in diese Arbeitskammer (13, 14) einmündet, sodass die gesteuerte Fluidbeaufschlagung der Antriebsmembran (12) durch den von dem ringförmigen Einsatzkörper (24, 25) umschlossenen Ringinnenraum (33) hindurch erfolgt.

6. Membranantrieb nach einem der Ansprüche 1 bis 5, **dadurch gekennzeichnet, dass** die beiden Einsatzkörper (24, 25) ohne eine direkte Spannverbindung allein durch axiale Beaufschlagung seitens der sie aufnehmenden Antriebsgehäuseteile (15, 16) axial miteinander und gleichzeitig mit der zwischen sie eingreifenden Antriebsmembran (12) verspannt sind, wobei zweckmäßigerweise jeder Einsatzkörper (24, 25) mindestens einen vom anderen Einsatzkörper (25, 24) axial abgewandten Abstützabschnitt (31) aufweist, an dem das zugeordnete Antriebsgehäuseteil (15, 16) mit einem Gegenabstützabschnitt (32) anliegt, wobei die beiden Antriebsgehäuseteile (15, 16) durch zwischen ihnen wirkende Spannmittel (22) axial miteinander verspannt sind, wodurch auch die beiden sich an den Antriebsgehäuseteilen (15, 16) abstützenden Einsatzkörper (24, 25) miteinander verspannt sind.

7. Membranantrieb nach einem der Ansprüche 1 bis 6, **dadurch gekennzeichnet, dass** die beiden Einsatzkörper (24, 25) gemeinsam mit dem Antriebsgehäuse (5) mindestens einen zu der Steuerkanalstruktur (52) gehörenden Fluidleitungsraum (64, 68) bilden.

8. Membranantrieb nach Anspruch 7, **dadurch gekennzeichnet, dass** einer oder jeder der beiden Einsatzkörper (24, 25) gemeinsam mit dem ihm zugeordneten Antriebsgehäuseteil (15, 16) der beiden Antriebsgehäuseteile (15, 16) mindestens einen zu der Steuerkanalstruktur (52) gehörenden Fluidleitungsraum (64, 68) bildet, der zweckmäßigerweise ringförmig ausgebildet ist und der ferner zweckmäßigerweise den betreffenden Einsatzkörper (24, 25) konzentrisch umschließt.

9. Membranantrieb nach Anspruch 7 oder 8, **dadurch gekennzeichnet, dass** die Steuerkanalstruktur (52) eine auf der einen axialen Seite der Antriebsmembran (12) außen am Antriebsgehäuse (5) angeordnete, für die Fluideinspeisung und die Fluidabfuhr nutzbare Anschlussöffnung (58a, 59a) aufweist und die Steuerkanalstruktur (52) innerhalb des Antriebsgehäuses (5) mittels des mindestens einen Fluidleitungsraumes (64, 68) auf die andere axiale Seite der Antriebsmembran (12) geführt ist, um mit der dort befindlichen Arbeitskammer (14) zu kommunizieren.

10. Membranantrieb nach einem der Ansprüche 1 bis 9, **dadurch gekennzeichnet, dass** die beiden Einsatzkörper (24, 25) ringförmig ausgebildet sind und jeweils eine vordere Ringöffnung (33a) und eine diesbezüglich axial entgegengesetzte hintere Ringöffnung (33b) haben, wobei ihre vorderen Ringöffnungen (33a) einander zugewandt sind und zweckmäßigerweise einen größeren Querschnitt haben als die hinteren Ringöffnungen (33b) .

11. Membranantrieb nach einem der Ansprüche 1 bis 10, **dadurch gekennzeichnet, dass** die beiden Einsatzkörper (24, 25) ringförmig ausgebildet sind und jeweils einen radial innenliegenden, einen peripheren Wandabschnitt (35) einer Arbeitskammer (13, 14) bildenden inneren Ringabschnitt (36) sowie einen radial außenliegenden, den inneren Ringabschnitt (36) koaxial umschließenden äußeren Ringabschnitt (37) enthalten, wobei die beiden Ringabschnitte (36, 37) an der der Antriebsmembran (12) zugewandten Vorderseite des Einsatzkörpers (24, 25) einstückig miteinander verbunden sind und wobei zweckmäßigerweise radial zwischen den beiden Ringabschnitten (36, 37) ein sich von der Vorderseite zur Rückseite des Einsatzkörpers (24, 25) hin im Querschnitt erweiternder Zwischenraum ausgebildet ist.

12. Membranantrieb nach einem der Ansprüche 1 bis 11, **dadurch gekennzeichnet, dass** die radiale Innenfläche (42) des einen peripheren Wandabschnitt (35) einer der Arbeitskammern (13, 14) bildenden Abschnittes jedes Einsatzkörpers (24, 25) im Anschluss an die Antriebsmembran (12) konvex gekrümmt und daran anschließend konkav gekrümmt ist.

13. Membranantrieb nach einem der Ansprüche 1 bis 12, **dadurch gekennzeichnet, dass** die beiden Antriebsgehäuseteile (15, 16) aus Metall, insbesondere Aluminium oder Edelstahl, bestehen und/oder dass die beiden Einsatzkörper (24, 25) aus Kunststoffmaterial bestehen.

14. Membranantrieb nach einem der Ansprüche 1 bis 13, **dadurch gekennzeichnet, dass** die Steuerkanalstruktur (52) mit beiden Arbeitskammern (13, 14) kommuniziert, sodass zum Hervorrufen der Abtriebsbewegung (47) des Abtriebsgliedes (45) beide Arbeitskammern (13, 14) gesteuert fluidbeaufschlagbar sind, und/oder dass in einer der Arbeitskammern (13, 14) eine zwischen der Antriebsmembran (12) und dem Antriebsgehäuse (5) wirksame, die Antriebsmembran (12) in eine Grundstellung vorspannende Federeinrichtung (53) angeordnet ist, und/oder dass das Abtriebsglied (45) stangenförmig ausgebildet ist und mindestens eines der Antriebsgehäuseteile (15, 16) gleitverschieblich nach außen hin durchsetzt.

15. Ventilanordnung, mit einer ein bewegliches Ventilglied (48) aufweisenden Ventilarmatur (3) und einem daran angeordneten, zur Betätigung des Ventilgliedes (48) dienenden fluidbetätigten Membranantrieb (2) nach einem der Ansprüche 1 bis 14, dessen Abtriebsglied (45) mit dem Ventilglied (48) bewegungsgekoppelt ist.

## Claims

1. Fluid-actuated diaphragm drive, with an actuator housing (5) which has two actuator housing sections (15, 16) placed axially one against the other in a joining area (17) by jointly bounding a housing interior (8), wherein there is mounted in the housing interior (8) a drive diaphragm (12) separating two axially adjacent working chambers (13, 14) from one another with fluid-tightness and coupled to an output member (45) for driving purposes, and which is axially deflectable by means of fluidic pressurisation, which may be controlled by a control passage structure (52) formed at least partly in the actuator housing (5), of at least one of the working chambers (13, 14) in order to generate an output movement (47) of the output member (45), **characterised in that** the drive diaphragm (12) is clamped at its outer edge section (23) with all-round sealing axially between insert bodies (24, 25) which are separate from the actuator housing (5) and are each inserted in one of the two actuator housing sections (15, 16), and form a peripheral wall section (35), adjoining the drive diaphragm (12), of the respectively assigned working chamber (13, 14), wherein a seal structure (56) is provided between at least one of the insert bodies (24, 25) and the actuator housing (5).

2. Diaphragm drive according to claim 1, **characterised in that** the seal structure (56) is separate from the insert bodies (24, 25) and/or the actuator housing (5) and expediently has one or more seal rings (67) arranged coaxially to the insert bodies (24, 25).

3. Diaphragm drive according to claim 1 or 2, **characterised in that** the wall of each insert body (24, 25) has no through holes, so that a controlled fluid pressurisation of the drive diaphragm (12) may be executed without the passage of fluid through the walls of the insert bodies (24, 25).

4. Diaphragm drive according to any of claims 1 to 3, **characterised in that** the seal structure (56) has several annular seal sections (65, 66, 69) arranged coaxially and with axial clearance from one another, wherein expediently two annular seal sections (65, 66) with axial clearance from one another are assigned to at least one insert body (24), wherein expediently precisely two annular seal sections (65, 66) with axial clearance from one another are assigned to the one insert body (24) and only one single annular seal section (69) is assigned to the other insert body (25).

5. Diaphragm drive according to any of claims 1 to 4, **characterised in that** the two insert bodies (24, 25) are annular in form and frame an annular inner space (33), wherein the control passage structure (52), in respect of at least one working chamber (13, 14), leads into this working chamber (13, 14) outside the section encompassed by the assigned insert body (24, 25), so that the controlled fluid pressurisation of the drive diaphragm (12) is effected through the annular inner space (33) encompassed by the annular insert body (24, 25).

6. Diaphragm drive according to any of claims 1 to 5, **characterised in that** the two insert bodies (24, 25) are braced, without any direct clamping connection and solely by axial pressure-loading on the part of the actuator housing sections (15, 16) holding them, axially with one another and simultaneously with the drive diaphragm (12) engaging between them, wherein expediently each insert body (24, 25) has at least one support section (31) facing axially away from the other insert body (25, 24), on which the assigned actuator housing section (15, 16) makes contact with a mating support section (32), wherein the two actuator housing sections (15, 16) are axially braced against one another by clamping means (22) acting between them, by which means the two insert bodies (24, 25) resting on the actuator housing sections (15, 16) are also braced against one another.

7. Diaphragm drive according to any of claims 1 to 6, **characterised in that** the two insert bodies (24, 25) together with the actuator housing (5) form at least one fluid line space (64, 68) belonging to the control passage structure (52).

8. Diaphragm drive according to claim 7, **characterised in that** one or each of the two insert bodies (24, 25) together with the actuator housing section (15, 16) of the two actuator housing sections (15, 16) assigned to it forms at least one fluid line space (64, 68) belonging to the control passage structure (52)., which is expediently annular in form and moreover expediently encompasses concentrically the insert body (24, 25) concerned.

9. Diaphragm drive according to claim 7 or 8, **characterised in that** the control passage structure (52) has a connection port (58a, 59a) located on the one axial side of the drive diaphragm (12) on the outside of the actuator housing (5) and usable for fluid supply and removal, and the control passage structure (52) is guided within the actuator housing (5) by means of the fluid line space or spaces (64, 68) on the other axial side of the drive diaphragm (12), in order to communicate with the working chamber (14) located there.

10. Diaphragm drive according to any of claims 1 to 9, **characterised in that** the two insert bodies (24, 25) are annular in shape, each having a front annular opening (33a) and a rear annular opening (33b) axially opposite the former, wherein their front annular openings (33a) face one another and expediently have a larger cross-section than the rear annular openings (33b).

11. Diaphragm drive according to any of claims 1 to 10, **characterised in that** the two insert bodies (24, 25) are annular in shape, each containing a radially-inwards-lying inner annular section (36) forming a peripheral wall section (35) of a working chamber (13, 14) and a radially-outwards-lying outer annular section (37) coaxially encompassing the inner annular section (36), wherein the two annular sections (36, 37) are joined together integrally on the front side of the insert body (24, 25) facing the drive diaphragm (12) and wherein expediently, radially between the two annular sections (36, 37), an intermediate space is formed which widens from the front to the rear of the insert body (24, 25).

12. Diaphragm drive according to any of claims 1 to 11, **characterised in that** the radial inner face (42) of the one peripheral wall section (35) of a section of each insert body (24, 25) forming one of the working chambers (13, 14) is convexly curved following the drive diaphragm (12) and subsequently is concavely curved.

13. Diaphragm drive according to any of claims 1 to 12, **characterised in that** the two actuator housing sections (15, 16) are made of metal, in particular of aluminium or stainless steel, and/or that the two insert bodies (24, 25) are made of plastic material.

14. Diaphragm drive according to any of claims 1 to 13, **characterised in that** the control passage structure (52) communicates with both working chambers (13, 14) so that, to generate the output movement (47) of the output member (45), both working chambers (13, 14) may be subject to controlled fluid pressurisation, and/or that there is provided in one of the working chambers (13, 14) a spring device (53) effective between the drive diaphragm (12) and the actuator housing (5) and biasing the drive diaphragm (12) into a basic position, and/or that the output member (45) is rod-like in shape and passes slidably through at least one of the actuator housing sections (15, 16) towards the outside.

15. Valve assembly, with a valve fitting (3) which has a movable valve member (48) and with a fluid-actuated diaphragm drive (2) according to any of claims 1 to 14, mounted thereon for actuation of the valve member (48) and having its output member (45) movement-coupled to the valve member (48).

## Revendications

1. Entraînement à membrane à actionnement fluidique, avec un boîtier d'entraînement (5), qui présente deux parties de boîtier d'entraînement (15, 16) placées de manière axiale l'une contre l'autre dans une zone d'assemblage (17) en délimitant conjointement un espace intérieur de boîtier (8), dans lequel est disposée, dans l'espace intérieur de boîtier (8), une membrane d'entraînement, (12) séparant l'une de l'autre de manière étanche aux fluides deux chambres de travail (13, 14) adjacentes de manière axiale et couplée en entraînement à un organe de sortie (45), qui peut être déviée de manière axiale par une action exercée par un fluide sur au moins une des chambres de travail (13, 14), pouvant être commandée au moyen d'une structure de canal de commande (52) réalisée au moins en partie dans le boîtier d'entraînement (5) pour provoquer un déplacement de sortie (47) de l'organe de sortie (45), **caractérisé en ce que** la membrane d'entraînement (12) est enserrée au niveau de sa section de bord extérieure (23) en étanchéifiant des corps d'insertion (24, 25) séparés tout autour axialement par rapport au boîtier d'entraînement (5), qui sont insérés respectivement dans une des deux parties de boîtier d'entraînement (15, 16) et forment une section de paroi (35) périphérique, située dans le prolongement de la membrane d'entraînement (12), de la chambre de travail (13, 14) respectivement associée, dans lequel une structure d'étanchéité (56) est disposée entre au moins un des corps d'insertion (24, 25) et le boîtier d'entraînement (5).

2. Entraînement à membrane selon la revendication 1, **caractérisé en ce que** la structure d'étanchéité (56) est réalisée de manière séparée par rapport aux corps d'insertion (24, 25) et/ou au boîtier d'entraînement (5) et dispose de manière opportune d'une ou de plusieurs bague(s) d'étanchéité disposée(s) de manière coaxiale par rapport aux corps d'insertion (24, 25).

3. Entraînement à membrane selon la revendication 1 ou 2, **caractérisé en ce que** la paroi de chaque corps d'insertion (24, 25) est réalisée de manière continue de sorte qu'une action commandée exercée par un fluide sur la membrane d'entraînement (12) peut être exécutée sans qu'un passage de fluide ait lieu à travers la paroi des corps d'insertion (24, 25) de part en part.

4. Entraînement à membrane selon l'une quelconque des revendications 1 à 3, **caractérisé en ce que** la structure d'étanchéité (56) présente plusieurs sections d'étanchéité (65, 66, 69) de forme annulaire disposées de manière coaxiale et à une distance axiale les unes par rapport aux autres, dans lequel de manière opportune deux sections d'étanchéité (65, 66) de forme annulaire espacées l'une par rapport à l'autre de manière axiale sont associées à au moins un corps d'insertion (24), dans lequel de manière opportune précisément deux sections d'étanchéité (65, 66) de forme annulaire espacées l'une par rapport à l'autre de manière axiale sont associées à un corps d'insertion (24) et seulement une unique section d'étanchéité (69) de forme annulaire est associée à l'autre corps d'insertion (25).

5. Entraînement à membrane selon l'une quelconque des revendications 1 à 4, **caractérisé en ce que** les deux corps d'insertion (24, 25) sont réalisés sous une forme annulaire en encadrant un espace intérieur annulaire (33), dans lequel la structure de canal de commande (52) débouche par rapport à au moins une chambre de travail (13, 14) à l'extérieur de la section enfermée par le corps d'insertion (24, 25) associé dans ladite chambre de travail (13, 14), de sorte que l'action commandée exercée par un fluide sur la membrane d'entraînement (12) s'opère à travers l'espace intérieur annulaire (33) enfermé par le corps d'insertion (24, 25) de forme annulaire de part en part.

6. Entraînement à membrane selon l'une quelconque des revendications 1 à 5, **caractérisé en ce que** les deux corps d'insertion (24, 25) sont assemblés par serrage l'un à l'autre de manière axiale sans une liaison par serrage directe seulement par une action axiale du côté des parties de boîtier d'entraînement (15, 16) les recevant et simultanément à la membrane d'entraînement (12) venant en prise entre eux, dans lequel de manière opportune chaque corps d'insertion (24, 25) présente au moins une section d'appui (31) opposée de manière axiale à l'autre corps d'insertion (25, 24), au niveau de laquelle la partie de boîtier d'entraînement (15, 16) associée repose avec une contre-section d'appui (32), dans lequel les deux parties de boîtier d'entraînement (15, 16) sont assemblées par serrage entre elles de manière axiale par des moyens de serrage (22) agissant entre elles, moyennant quoi les deux corps d'insertion (24, 25) prenant appui au niveau des parties de boîtier d'entraînement (15, 16) sont également assemblés par serrage entre eux.

7. Entraînement à membrane selon l'une quelconque des revendications 1 à 6, **caractérisé en ce que** les deux corps d'insertion (24, 25) forment conjointement avec le boîtier d'entraînement (5) au moins un espace d'acheminement de fluide (64, 68) faisant partie de la structure de canal de commande (52).

8. Entraînement à membrane selon la revendication 7, **caractérisé en ce qu'**un ou chacun des deux corps d'insertion (24, 25) forme conjointement avec la partie de boîtier d'entraînement (15, 16) qui lui est associée des deux parties de boîtier d'entraînement (15, 16) au moins un espace d'acheminement de fluide (64, 68) faisant partie de la structure de canal de commande (52), qui est réalisé de manière opportune sous une forme annulaire et qui en outre de manière opportune enferme de manière concentrique le corps d'insertion (24, 25) concerné.

9. Entraînement à membrane selon la revendication 7 ou 8, **caractérisé en ce que** la structure de canal de commande (52) présente une ouverture de raccordement (58a, 59a) disposée à l'extérieur au niveau du boîtier d'entraînement (5) sur un côté axial de la membrane d'entraînement (12), pouvant être utilisée pour l'injection de fluide et l'évacuation de fluide, et la structure de canal de commande (52) est guidée à l'intérieur du boîtier d'entraînement (5) au moyen de l'au moins un espace d'acheminement de fluide (64, 68) sur l'autre côté axial de la membrane d'entraînement (12) pour communiquer avec la chambre de travail (14) s'y trouvant.

10. Entraînement à membrane selon l'une quelconque des revendications 1 à 9, **caractérisé en ce que** les deux corps d'insertion (24, 25) sont réalisés sous une forme annulaire et ont respectivement une ouverture annulaire avant (33a) et une ouverture annulaire arrière (33b) axialement opposée par rapport à celle-ci, dans lequel leurs ouvertures annulaires avant (33a) sont tournées l'une vers l'autre et ont de manière opportune une section transversale plus grande que les ouvertures annulaires arrière (33b).

11. Entraînement à membrane selon l'une quelconque des revendications 1 à 10, **caractérisé en ce que** les deux corps d'insertion (24, 25) sont réalisés sous une forme annulaire et contiennent respectivement une section annulaire intérieure (36) située à l'intérieur radialement, formant une section de paroi périphérique (35) d'une chambre de travail (13, 14) ainsi qu'une section annulaire extérieure (37) située à l'extérieur radialement, enfermant de manière coaxiale la section annulaire intérieure (36), dans lequel les deux sections annulaires (36, 37) sont reliées l'une à l'autre d'un seul tenant au niveau du côté avant, tourné vers la membrane d'entraînement (12), du corps d'insertion (24, 25) et dans lequel de manière opportune un espace intermédiaire s'élargissant dans la section transversale depuis le côté avant en direction du côté arrière du corps d'insertion (24, 25) est réalisé de manière radiale entre les deux sections annulaires (36, 37).

12. Entraînement à membrane selon l'une quelconque des revendications 1 à 11, **caractérisé en ce que** la surface intérieure radiale (42) de la section, formant une section de paroi périphérique (35) d'une des chambres de travail (13, 14), de chaque corps d'insertion (24, 25) est incurvée de manière convexe dans le prolongement de la membrane d'entraînement (12) et est incurvée de manière concave dans le prolongement de celle-ci.

13. Entraînement à membrane selon l'une quelconque des revendications 1 à 12, **caractérisé en ce que** les deux parties de boîtier d'entraînement (15, 16) sont constituées de métal, en particulier d'aluminium ou d'acier inoxydable, et/ou que les deux corps d'insertion (24, 25) sont constitués d'un matériau plastique.

14. Entraînement à membrane selon l'une quelconque des revendications 1 à 13, **caractérisé en ce que** la structure de canal de commande (52) communique avec les deux chambres de travail (13, 14) de sorte que pour provoquer le déplacement de sortie (47) de l'organe de sortie (45), les deux chambres de travail (13, 14) peuvent être soumises à l'action commandée d'un fluide, et/ou que dans une des chambres de travail (13, 14), est disposé un système de ressort (53) actif entre la membrane d'entraînement (12) et le boîtier d'entraînement (5), précontraignant la membrane d'entraînement (12) dans une position de base, et/ou que l'organe de sortie (45) est réalisé sous forme de tige et traverse au moins une des parties de boîtier d'entraînement (15, 16) de manière coulissante par glissement vers l'extérieur.

15. Ensemble formant soupape, avec un robinet à soupape (3) présentant un organe de soupape (48) mobile et un entraînement à membrane (2) à actionnement fluidique selon l'une quelconque des revendications 1 à 14, disposé au niveau de celui-ci, servant à l'actionnement de l'organe de soupape (48), dont l'organe de sortie (45) est couplé en déplacement à l'organe de soupape (48).
